# EUROPÄISCHE PATENTANMELDUNG

(11) **EP 4 381 924 A1**
(43) Veröffentlichungstag der Anmeldung: **12.06.2024**
(21) Anmeldenummer: 22212029.7
(22) Anmeldetag: 07.12.2022
(51) Int. Cl.: A01D 34/00, A01D 75/18, A01D 34/74

(54) **VERFAHREN UND SYSTEM ZUM BETREIBEN EINES AUTONOMEN MOBILEN GRÜNFLÄCHENBEARBEITUNGSROBOTERS**

(71) Anmelder: Andreas Stihl AG & Co. KG, 71336 Waiblingen (DE)
(72) Erfinder: Horngacher, Christian, 6365 Kirchberg (AT); Wolf, Philip, 6341 Ebbs (AT); Biechl, Alexander, 6330 Kufstein (AT); Rieger, Alexander, 83115 Neubeuern (DE); Steinlechner, Christoph, 6334 Schwoich (AT); Ritzer, Peter, 6341 Ebbs (AT); Reitter, Michael, 6330 Kufstein (AT); Müller, Tobias, 6300 Wörgl (AT)
(74) Vertreter: Patentanwälte Ruff, Wilhelm, Beier, Dauster & Partner mbB

(57) **Zusammenfassung**

Die Erfindung bezieht sich auf ein Verfahren zum Betreiben eines autonomen mobilen Grünflächenbearbeitungsroboters (1), wobei der Grünflächenbearbeitungsroboter (1) ein Antriebssystem (2) aufweist, wobei das Antriebssystem (2) zu einer Fortbewegung des Grünflächenbearbeitungsroboters (1) ausgebildet ist, wobei das Verfahren die Schritte aufweist:
a) Überwachen, ob ein Festhäng-Vermutungs-Kriterium (FVK) erfüllt ist, wobei das Festhäng-Vermutungs-Kriterium (FVK) für ein mutmaßliches Festhängen des Grünflächenbearbeitungsroboters (1) charakteristisch ist,
b) falls das Festhäng-Vermutungs-Kriterium (FVK) erfüllt ist, Betreiben des Antriebssystems (2) zu einer Bewegungsänderung (BA) des Grünflächenbearbeitungsroboters (1) und Überwachen, ob ein Festhäng-Bestätigungs-Kriterium (FBK) erfüllt ist, wobei das Festhäng-Bestätigungs-Kriterium (FBK) ist, dass sich die Bewegungsänderung (BA) nicht einstellt, und
c) falls das Festhäng-Bestätigungs-Kriterium (FBK) erfüllt ist, Einleiten einer Festhäng-Gegenmaßnahme (FG) des Grünflächenbearbeitungsroboters (1).

## Beschreibung

### ANWENDUNGSGEBIET UND STAND DER TECHNIK

Die Erfindung bezieht sich auf ein Verfahren und ein System, insbesondere jeweils, zum Betreiben eines autonomen mobilen Grünflächenbearbeitungsroboters.

### AUFGABE UND LÖSUNG

Der Erfindung liegt als Aufgabe die Bereitstellung eines Verfahrens und eines Systems, insbesondere jeweils, zum Betreiben eines autonomen mobilen Grünflächenbearbeitungsroboters zugrunde, das verbesserte Eigenschaften aufweist.

Die Erfindung löst diese Aufgabe durch die Bereitstellung eines Verfahrens und eines Systems beschrieben in den unabhängigen Ansprüchen. Vorteilhafte Weiterbildungen und/oder Ausgestaltungen der Erfindung sind in den abhängigen Ansprüchen beschrieben.

Das erfindungsgemäße Verfahren ist zum Betreiben eines autonomen mobilen Grünflächenbearbeitungsroboters. Der Grünflächenbearbeitungsroboter weist ein Antriebssystem auf. Das Antriebssystem ist zu einer Fortbewegung des Grünflächenbearbeitungsroboters ausgebildet, insbesondere auf einer Grünfläche. Das Verfahren weist die Schritte auf: a) Überwachen, ob, insbesondere mindestens oder nur, ein, insbesondere einziges, Festhäng-Vermutungs-Kriterium erfüllt ist. Das Festhäng-Vermutungs-Kriterium ist für ein mutmaßliches Festhängen des Grünflächenbearbeitungsroboters charakteristisch, b) falls, insbesondere mindestens oder nur, das Festhäng-Vermutungs-Kriterium erfüllt ist, Betreiben des Antriebssystems zu einer Bewegungsänderung des Grünflächenbearbeitungsroboters und Überwachen, ob, insbesondere mindestens oder nur, ein, insbesondere einziges, Festhäng-Bestätigungs-Kriterium erfüllt ist. Das Festhäng-Bestätigungs-Kriterium ist, dass sich die Bewegungsänderung, insbesondere mit einem Mindestwert bzw. -maß, nicht einstellt. c) falls, insbesondere mindestens oder nur, das Festhäng-Bestätigungs-Kriterium erfüllt ist, Einleiten einer Festhäng-Gegenmaßnahme des Grünflächenbearbeitungsroboters.

Dies, insbesondere dieser zweite Schritt b) bzw. diese zweite Stufe, ermöglicht das mutmaßliche Festhängen, insbesondere mittels des ersten Schritts a) bzw. dieser ersten Stufe erkannt, zu bestätigen und somit ein zuverlässiges, insbesondere zweistufiges, Erkennen des, insbesondere tatsächlichen, Festhängens. Somit ermöglicht dies ein unnötiges Einleiten der Festhäng-Gegenmaßnahme zu vermeiden. Somit ermöglicht dies einen Energieverbrauch und/oder Logikapazitäten niedrig zu halten. Denn insbesondere kann das Betreiben zu der Bewegungsänderung einen niedrigeren Energieverbrauch und/oder niedrigere Logikapazitäten im Vergleich zu dem Einleiten der Festhäng-Gegenmaßnahme haben. Zusätzlich oder alternativ ermöglicht das Einleiten der Festhäng-Gegenmaßnahme ein Lösen des Festhängens und somit ein Befreien des Grünflächenbearbeitungsroboters.

Insbesondere können/kann das Verfahren, das Betreiben, das Überwachen und/oder das Einleiten automatisch und/oder computerimplementiert sein und/oder mittels einer Überwachungs- und Betriebseinrichtung, insbesondere des Grünflächenbearbeitungsroboters, ausgeführt werden.

Autonomer mobiler Grünflächenbearbeitungsroboter kann bedeuten, dass der Grünflächenbearbeitungsroboter dazu ausgebildet sein kann, sich automatisch bzw. selbstständig bzw. selbstgesteuert und/oder unabhängig von einem Nutzer, insbesondere auf der Grünfläche, die vorgegeben und/oder begrenzt sein kann, fortzubewegen und/oder automatisch bzw. selbstständig bzw. selbstgesteuert und/oder unabhängig von dem Nutzer, insbesondere die Grünfläche, zu bearbeiten, insbesondere das Bearbeiten bzw. die Bearbeitung zu beginnen und/oder zu beenden.

Der Grünflächenbearbeitungsroboter kann ein Bearbeitungswerkzeug, insbesondere ein Schneidwerkzeug, aufweisen, insbesondere wobei das Bearbeitungswerkzeug zu einer Bearbeitung der Grünfläche ausgebildet sein kann.

Die Grünfläche kann eine Wiese sein.

Der Grünflächenbearbeitungsroboter und/oder das Antriebssystem können/kann elektrisch sein.

Das Antriebssystem kann ein Fortbewegungsantriebssystem und/oder ein Motorantriebssystem aufweisen, insbesondere sein.

Der Begriff "umfasst" oder "hat" kann für den Begriff "aufweist" synonym verwendet werden.

Der Begriff "konfiguriert" oder "eingerichtet" kann für den Begriff "ausgebildet" synonym verwendet werden.

Der Begriff "Erkennen" oder "Detektieren" oder "Überprüfen" kann für den Begriff "Überwachen" synonym verwendet werden.

Der Begriff "Feststeck/en" oder "Festfahr/en" kann für den Begriff "Festhäng/en" synonym verwendet werden.

Das Festhängen des Grünflächenbearbeitungsroboters kann mit einem Berührungsteil bzw. Berührungselement, insbesondere dem Bearbeitungswerkzeug, und/oder auf einem Hindernis, insbesondere einem Hügel, sein. Insbesondere können/kann das Berührungsteil und/oder das Bearbeitungswerkzeug an einer Unterseite des Grünflächenbearbeitungsroboters, insbesondere räumlich, angeordnet sein.

Der Begriff "Verdacht" kann für den Begriff "Vermutung" synonym verwendet werden.

Der Begriff "kennzeichnend" kann für den Begriff "charakteristisch" synonym verwendet werden.

Der Begriff "Kontrollieren" oder "Ansteuern" kann für den Begriff "Betreiben" synonym verwendet werden. Zusätzlich oder alternativ kann das Betreiben gezielt sein.

Das Festhäng-Vermutungs-Kriterium und das Festhäng-Bestätigungs-Kriterium können verschieden, insbesondere verschiedenartig, sein. Zusätzlich oder alternativ können/kann das Festhäng-Vermutungs-Kriterium und/oder die Bewegungsänderung und/oder das Festhäng-Bestätigungs-Kriterium vorgegeben sein, insbesondere werksseitig.

Die Bewegungsänderung kann eine Beschleunigung, insbesondere eine Geschwindigkeitswertänderung und/oder eine Drehung bzw. Richtungsänderung, insbesondere bei gleichbleibendem Geschwindigkeitswert, aufweisen, insbesondere sein. Zusätzlich oder alternativ kann die Bewegungsänderung eine Änderung der Fortbewegung sein. Weiter zusätzlich oder alternativ kann Mindestwert mindestens 10 % (Prozent), insbesondere mindestens 50 %, insbesondere mindestens 90 %, eines Soll- bzw. Erwartungswerts bedeuten.

Der Schritt b) kann als bewusste Manipulation der Geschwindigkeit (z.B. der Vorwärtsgeschwindigkeit) des Grünflächenbearbeitungsroboters bzw. provozierte Anregung des Grünflächenbearbeitungsroboters und als Prüfung einer Antwort des Grünflächenbearbeitungsroboters bezeichnet werden.

Falls das Festhäng-Vermutungs-Kriterium nicht, insbesondere mehr, erfüllt ist, braucht oder kann nicht der Schritt b) ausgeführt werden, insbesondere das Antriebssystem zu der Bewegungsänderung betrieben werden. Insbesondere kann der Schritt a) ausgeführt werden.

Falls das Festhäng-Bestätigungs-Kriterium nicht, insbesondere mehr, erfüllt ist, braucht oder kann nicht der Schritt c) ausgeführt werden, insbesondere die Festhäng-Gegenmaßnahme eingeleitet werden. Insbesondere kann der Schritt a) ausgeführt werden.

Der Begriff "Lösung" oder "Befreiung" kann für den Begriff "Gegen" synonym verwendet werden.

Der Begriff "Auslösen" oder "Ausführen" kann für den Begriff "Einleiten" synonym verwendet werden.

Das Überwachen, das Betreiben und/oder das Einleiten können/kann mittels des Grünflächenbearbeitungsroboters ausgeführt werden. Insbesondere kann das Überwachen mittels, insbesondere mindestens, eines, insbesondere elektrischen, Sensors des Grünflächenbearbeitungsroboters ausgeführt werden. Insbesondere kann der Sensor von dem Antriebssystem unabhängig sein.

Der Schritt a) kann, insbesondere mehrfach, wiederholt und/oder kontinuierlich oder fortlaufend ausgeführt werden.

Der Schritt b) kann zeitlich nach dem Schritt a) ausgeführt werden.

Der Schritt c) kann zeitlich nach dem Schritt b) ausgeführt werden.

In einer Weiterbildung der Erfindung ist der Grünflächenbearbeitungsroboter ein Rasenmähroboter, insbesondere aufweisend ein Rasenmähwerkzeug. Dieses Verfahren ermöglicht besondere Vorteile für einen derartigen Grünflächenbearbeitungsroboter. Insbesondere kann der Grünflächenbearbeitungsroboter ein Mulchmähroboter sein. Zusätzlich oder alternativ kann das Rasenmähwerkzeug mindestens einen Mähfaden, mindestens ein Kunststoffmesser, mindestens ein Metallmesser und/oder ein Metallschneideblatt mit mindestens einer Schneidkante und/oder mit mindestens einem Schneidezahn umfassen.

Weiter zusätzlich oder alternativ kann das Rasenmähwerkzeug als ein rotierendes Rasenmähwerkzeug und dazu ausgebildet sein, ein zu mähendes Gut im sogenannten Freischnittverfahren ohne Gegenschneide zu mähen. Weiter zusätzlich oder alternativ kann das Rasenmähwerkzeug zum Mähen der Grünfläche ausgebildet sein. Weiter zusätzlich oder alternativ kann die Grünfläche ein Rasen sein.

In einer Weiterbildung der Erfindung ist der Grünflächenbearbeitungsroboter als ein fahrbarer Grünflächenbearbeitungsroboter ausgebildet. Zusätzlich oder alternativ weist das Antriebssystem ein Fahrantriebssystem auf. Insbesondere ist das Antriebssystem das Fahrantriebssystem. Das Fahrantriebssystem ist zu einer Fahrbewegung des Grünflächenbearbeitungsroboters ausgebildet. Dies ermöglicht eine besonders vorteilhafte Fortbewegung.

In einer Weiterbildung der Erfindung weist der Schritt a) auf: Betreiben des Antriebssystems zu der Fortbewegung des Grünflächenbearbeitungsroboters. Insbesondere weist der Schritt b) auf: verändertes bzw. verschiedenes Betreiben des Antriebssystems. Dies, insbesondere dieser Schritt a), ermöglicht das Bearbeiten. Insbesondere kann die Fortbewegung vorgegeben sein, insbesondere werksseitig.

In einer Weiterbildung, insbesondere einer Ausgestaltung, der Erfindung ist das Festhäng-Vermutungs-Kriterium, dass sich auf eine, insbesondere die, Fortbewegung, insbesondere mit einem Mindestwert bzw. -maß, des Grünflächenbearbeitungsroboters nicht rückschließen lässt, insbesondere trotz des Betreibens des Antriebssystems zu der Fortbewegung, insbesondere eine Stoßstange des Grünflächenbearbeitungsroboters nicht anstößt und/oder sich ein Abstand, eine Position, eine Wegstrecke und/oder eine Neigung des Grünflächenbearbeitungsroboters nicht verändern/verändert und/oder der Grünflächenbearbeitungsroboter keine Drehrate und/oder keine Beschleunigung erfährt, insbesondere innerhalb eines vorgegebenen Zeitraums. Dies ermöglicht ein besonders gutes Erkennen des, insbesondere mutmaßlichen, Festhängens. Insbesondere kann trotz des Betreibens bedeuten, trotz eines, insbesondere maximalen, Antriebsmoments größer Null und/oder eines das Antriebsmoment verursachenden, insbesondere maximalen, Antriebsstroms größer Null. Zusätzlich oder alternativ kann die Stoßstange ein Teil einer Abdeckhaube des Grünflächenbearbeitungsroboters sein. Weiter zusätzlich oder alternativ kann der Abstand gegenüber einem, insbesondere immobilen, Objekt, wie z.B. einer Wand und/oder einem Begrenzungsdraht, sein. Weiter zusätzlich oder alternativ kann der Zeitraum werksseitig vorgegeben und/oder minimal 10 s (Sekunden), insbesondere minimal 20 s, insbesondere minimal 60 s, insbesondere minimal 120 s, und/oder maximal 3600 s, insbesondere maximal 1200 s, insbesondere maximal 600 s, insbesondere maximal 300 s, insbesondere maximal 150 s, sein. Weiter zusätzlich oder alternativ kann der Begriff "Zeitintervall" für den Begriff "Zeitraum" synonym verwendet werden.

In einer Weiterbildung, insbesondere einer Ausgestaltung, der Erfindung wird das Überwachen des Schritts a) und/oder des Schritts b) mittels eines Stoßsensors, eines Abstandssensors, insbesondere eines Ultraschallsensors und/oder eines Magnetfeldsensors, eines, insbesondere globalen und/oder lokalen, Positionssensors, eines, insbesondere visuellen, Odometriesensors, eines Neigungssensors, eines Drehratensensors und/oder eines Beschleunigungssensors des Grünflächenbearbeitungsroboters ausgeführt. Dies ermöglicht ein besonders gutes Überwachen, Insbesondere kann ein Magnetfeld, insbesondere eine Amplitude und/oder eine Phase des Magnetfelds, durch einen elektrischen Strom fließend durch den Begrenzungsdraht verursacht sein. Zusätzlich oder alternativ kann der globale Positionssensor einen Satelliten-Positionsbestimmungsempfänger aufweisen, insbesondere der Satelliten-Positionsbestimmungsempfänger sein, wie z.B. für GNSS. Weiter zusätzlich oder alternativ können/kann der Drehratensensor und/oder der Beschleunigungssensor ein Teil eines Inertial- bzw. Trägheitsensors sein.

In einer Weiterbildung der Erfindung wird das Betreiben des Antriebssystems zu der Bewegungsänderung mit einem negativen Hub einer Sollgeschwindigkeit, insbesondere von maximal - 0,6 m/s (Meter pro Sekunde), insbesondere maximal - 0,3 m/s, und mit einer Sollbremsrampe, insbesondere von maximal - 4 m/s² (Meter pro Quadratsekunde), insbesondere maximal - 2 m/s², ausgeführt. Dies, insbesondere das relativ starke Abbremsen, ermöglicht ein besonders gutes Bestätigen des mutmaßlichen Festhängens. Insbesondere braucht nicht die Bewegungsänderung eine Drehung aufweisen, insbesondere sein. Zusätzlich oder alternativ kann der negative Hub minimal - 0,05 m/s sein und/oder die Sollbremsrampe kann minimal - 0,05 m/s² sein.

In einer Weiterbildung der Erfindung sind das Betreiben des Antriebssystems zu der Bewegungsänderung und die Festhäng-Gegenmaßnahme, insbesondere qualitativ und/oder quantitativ, verschieden, insbesondere verschiedenartig. Insbesondere kann quantitativ verschieden mindestens 50 %, insbesondere mindestens 75 %, insbesondere mindestens 100 %, insbesondere mindestens 200 %, verschieden bedeuten.

In einer Weiterbildung der Erfindung weist der Grünflächenbearbeitungsroboter ein, insbesondere das, Bearbeitungswerkzeug auf. Eine Bearbeitungshöhe, insbesondere ein Wert der Bearbeitungshöhe, des Bearbeitungswerkzeugs ist verstellbar. Die Festhäng-Gegenmaßnahme weist auf: Vergrößern der Bearbeitungshöhe. Zusätzlich oder alternativ weist die Festhäng-Gegenmaßnahme auf, insbesondere zeitlich nach dem Vergrößern der Bearbeitungshöhe: Betreiben des Antriebssystems zu einer, insbesondere zweimal, größeren Bewegungsänderung des Grünflächenbearbeitungsroboters, insbesondere in abgewandter, insbesondere entgegengesetzter, Fortbewegungsrichtung. Weiter zusätzlich oder alternativ weist die Festhäng-Gegenmaßnahme auf, insbesondere zeitlich nach dem Betreiben des Antriebssystems zu der größeren Bewegungsänderung: Ausgeben und/oder Übertragen einer nutzerwahrnehmbaren Festhäng-Information. Dies ermöglicht, insbesondere das Vergrößern der Bearbeitungserhöhe und/oder das Betreiben des Antriebssystems zu der größeren Bewegungsänderung ermöglichen/ermöglicht, das Lösen des Festhängens und somit das Befreien des Grünflächenbearbeitungsroboters, insbesondere ohne den Nutzer. Zusätzlich oder alternativ ermöglicht dies, insbesondere das Ausgeben und/oder das Übertragen der nutzerwahrnehmbaren Festhäng-Information, das Lösen des Festhängens und somit das Befreien des Grünflächenbearbeitungsroboters durch den Nutzer, insbesondere falls das Vergrößern der Bearbeitungserhöhe und/oder das Betreiben des Antriebssystems zu der größeren Bewegungsänderung das Festhängen nicht lösen/löst. Insbesondere kann der Begriff "Werkzeughöhe", insbesondere "Schnitthöhe" oder "Rasenmähhöhe", für den Begriff "Bearbeitungshöhe" synonym verwendet werden. Zusätzlich oder alternativ kann der Grünflächenbearbeitungsroboter eine Fahrebene aufweisen bzw. definieren, wobei die Bearbeitungshöhe über der Fahrebene sein kann. Weiter zusätzlich oder alternativ kann verstellbar in mindestens drei Stufen oder stufenlos verstellbar sein. Weiter zusätzlich oder alternativ kann die Bearbeitungshöhe in einem Bereich von 0 cm (Zentimeter), insbesondere 2,5 cm, insbesondere 5 cm, bis 20 cm, insbesondere 15 cm, insbesondere 10 cm, verstellbar sein, insbesondere von der Grünfläche und/oder der Fahrebene aus. Weiter zusätzlich oder alternativ kann das Vergrößern der Bearbeitungshöhe maximal und/oder in eine obere Anschlagsgrenze sein. Weiter zusätzlich oder alternativ kann die Formulierung "Anheben des Bearbeitungswerkzeugs" für die Formulierung "Vergrößern der Bearbeitungshöhe" synonym verwendet werden. Weiter zusätzlich oder alternativ kann der Grünflächenbearbeitungsroboter derart ausgebildet sein, dass das Vergrößern der Bearbeitungshöhe unabhängig von der Fortbewegung des Grünflächenbearbeitungsroboters sein kann. Weiter zusätzlich oder alternativ kann das Vergrößern mittels einer, insbesondere elektrischen, Höhenverstellungseinrichtung des Grünflächenbearbeitungsroboters ausgeführt werden. Insbesondere kann die Höhenverstellungseinrichtung von dem Antriebssystem und/oder dem Sensor unabhängig sein. Weiter zusätzlich oder alternativ können/kann das Vergrößern, das Ausgeben und/oder das Übertragen automatisch sein. Weiter zusätzlich oder alternativ kann die größere Bewegungsänderung eine Drehung aufweisen, insbesondere sein. Weiter zusätzlich oder alternativ kann die Fortbewegungsrichtung abgewandt, insbesondere entgegengesetzt, zu einer Fortbewegungsrichtung zeitlich vor der Erfüllung des Festhäng-Vermutungs-Kriteriums und/oder des Festhäng-Bestätigungs-Kriteriums sein. Weiter zusätzlich oder alternativ kann der Grünflächenbearbeitungsroboter mindestens ein angetriebenes Laufrad und mindestens ein nicht-angetriebenes Laufrad zu der Fortbewegung des Grünflächenbearbeitungsroboters aufweisen. Mindestens das nicht-angetriebene Laufrad kann vor mindestens dem angetriebenen Laufrad in der Fortbewegungsrichtung angeordnet sein. Insbesondere kann vor in einer Vorzug- bzw. Hauptbewegungsrichtung des Grünflächenbearbeitungsroboters sein. Weiter zusätzlich oder alternativ kann die Fortbewegung in die Fortbewegungsrichtung eine Vorwärtsbewegung sein. Weiter zusätzlich oder alternativ kann das Ausgeben optisch und/oder akustisch sein und/oder das Übertragen kann kabel- bzw. drahtlos sein. Weiter zusätzlich oder alternativ kann auch einfach ein Stoppen bzw. Stehenbleiben denkbar bzw. möglich sein.

In einer Ausgestaltung der Erfindung weist der Grünflächenbearbeitungsroboter ein Fortbewegungsgestell, insbesondere ein Fahrgestell, und/oder eine, insbesondere die, Abdeckhaube auf. Die Bearbeitungshöhe ist gegenüber dem Fortbewegungsgestell und/oder der Abdeckhaube verstellbar. Dies ermöglicht eine Beibehaltung eines Schutzes vor einem Eingriff in das Bearbeitungswerkzeug mittels des Fortbewegungsgestells und/oder der Abdeckhaube. Insbesondere können das Fortbewegungsgestell und/oder die Abdeckhaube, insbesondere mit einem Teil vor dem Berührungsteil und/oder dem Bearbeitungswerkzeug, oberhalb des Berührungsteils und/oder des Bearbeitungswerkzeugs angeordnet sein. Zusätzlich oder alternativ kann der Begriff "Chassis" für den Begriff "Fahrgestell" synonym verwendet werden. Weiter zusätzlich oder alternativ kann der Begriff "Schutzhaube" für den Begriff "Abdeckhaube" synonym verwendet werden. Weiter zusätzlich oder alternativ können/kann das Berührungsteil und/oder das Bearbeitungswerkzeug an einer Unterseite des Fortbewegungsgestells und/oder der Abdeckhaube angeordnet sein. Weiter zusätzlich oder alternativ brauchen/braucht oder können/kann nicht eine Höhe des Fortbewegungsgestells und/oder eine Höhe der Abdeckhaube verstellbar sein. Weiter zusätzlich oder alternativ kann die Formulierung "in Bezug auf" für den Begriff "gegenüber" synonym verwendet werden.

In einer Weiterbildung der Erfindung weist das Verfahren auf: falls das Festhäng-Vermutungs-Kriterium und/oder das Festhäng-Bestätigungs-Kriterium nicht, insbesondere mehr, erfüllt sind/ist, insbesondere unverändertes bzw. normales, Betreiben des Antriebssystems zu der Fortbewegung des Grünflächenbearbeitungsroboters und/oder kein Einleiten und/oder Beenden der Festhäng-Gegenmaßnahme. Dies ermöglicht das Bearbeiten. Insbesondere kann die Fortbewegung vorgegeben sein, insbesondere werksseitig. Zusätzlich oder alternativ braucht oder kann nicht die Bearbeitungshöhe vergrößert werden, insbesondere kann verkleinert werden.

Das erfindungsgemäße System ist zum Betreiben eines, insbesondere des, autonomen mobilen Grünflächenbearbeitungsroboters. Der Grünflächenbearbeitungsroboter weist ein, insbesondere das, Antriebssystem auf. Das Antriebssystem ist zu einer, insbesondere der, Fortbewegung des Grünflächenbearbeitungsroboters ausgebildet. Das System weist eine, insbesondere die, Überwachungs- und Betriebseinrichtung auf, und insbesondere den Grünflächenbearbeitungsroboter. Insbesondere weist der Grünflächenbearbeitungsroboter die Überwachungs- und Betriebseinrichtung auf. Die Überwachungs- und Betriebseinrichtung ist dazu ausgebildet:
- zum Überwachen, ob ein, insbesondere das, Festhäng-Vermutungs-Kriterium erfüllt ist, wobei das Festhäng-Vermutungs-Kriterium für ein mutmaßliches, insbesondere das mutmaßliche, Festhängen des Grünflächenbearbeitungsroboters charakteristisch ist,
- falls das Festhäng-Vermutungs-Kriterium erfüllt ist, zum Betreiben des Antriebssystems zu einer, insbesondere der, Bewegungsänderung des Grünflächenbearbeitungsroboters und zum Überwachen, ob ein, insbesondere das, Festhäng-Bestätigungs-Kriterium erfüllt ist, wobei das Festhäng-Bestätigungs-Kriterium ist, dass sich die Bewegungsänderung nicht einstellt, und
- falls das Festhäng-Bestätigungs-Kriterium erfüllt ist, zum Einleiten einer, insbesondere der, Festhäng-Gegenmaßnahme des Grünflächenbearbeitungsroboters.

Das System kann den/die gleichen Vorteil/e wie für das Verfahren vorhergehend genannt ermöglichen.

Insbesondere kann das System zum, insbesondere automatischen, Ausführen eines, insbesondere des, Verfahrens wie vorhergehend genannt ausgebildet sein. Zusätzlich oder alternativ kann das System ein Grünflächenbearbeitungssystem sein. Weiter zusätzlich oder alternativ können/kann das System und/oder die Überwachungs- und Betriebseinrichtung elektrisch sein und/oder den Sensor und/oder eine Recheneinrichtung und/oder einen Prozessor und/oder einen Mikrocontroller und/oder eine Speichereinrichtung und/oder einen Computer aufweisen. Weiter zusätzlich oder alternativ kann der Grünflächenbearbeitungsroboter wie vorhergehend für das Verfahren genannt ausgebildet sein. Weiter zusätzlich oder alternativ kann die Überwachungs- und Betriebseinrichtung die Höhenverstellungseinrichtung aufweisen.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgenden anhand der Figuren erläutert sind. Dabei zeigen:
- Fig. 1: eine Perspektivansicht eines erfindungsgemäßen Systems aufweisend einen autonomen mobilen Grünflächenbearbeitungsroboter,
- Fig. 2: eine geschnittene Seitenansicht des Systems der Fig. 1 und ein erfindungsgemäßes Verfahren zum Betreiben des autonomen mobilen Grünflächenbearbeitungsroboters,
- Fig. 3: eine geschnittene Seitenansicht des Systems der Fig. 1 und des Verfahrens der Fig. 2 bei einem Überwachen eines mutmaßlichen Festhängens des Grünflächenbearbeitungsroboters,
- Fig. 4: eine geschnittene Seitenansicht des Systems der Fig. 1 und des Verfahrens der Fig. 2 bei einem Bestätigen des mutmaßlichen Festhängens,
- Fig. 5: eine geschnittene Seitenansicht des Systems der Fig. 1 und des Verfahrens der Fig. 2 bei einem Einleiten einer Festhäng-Gegenmaßnahme aufweisend ein Vergrößern einer Bearbeitungshöhe eines Bearbeitungswerkzeugs des Grünflächenbearbeitungsroboters,
- Fig. 6: eine Draufsicht des Systems der Fig. 1 und des Verfahrens der Fig. 2 bei dem Einleiten der Festhäng-Gegenmaßnahme aufweisend ein Betreiben eines Antriebssystems des Grünflächenbearbeitungsroboters zu einer größeren Bewegungsänderung in eine abgewandte Fortbewegungsrichtung des Grünflächenbearbeitungsroboters,
- Fig. 7: eine geschnittene Seitenansicht des Systems der Fig. 1 und des Verfahrens der Fig. 2 bei einem Beenden der Festhäng-Gegenmaßnahme, insbesondere einem Verkleinern der Bearbeitungshöhe, und
- Fig. 8: zu dem Bestätigen des mutmaßlichen Festhängens ein Betreiben des Antriebssystems zu einer Bewegungsänderung des Grünflächenbearbeitungsroboters mit einem negativen Hub einer Sollgeschwindigkeit und mit einer Sollbremsrampe.

### DETAILLIERTE BESCHREIBUNG DER AUSFÜHRUNGSBEISPIELE

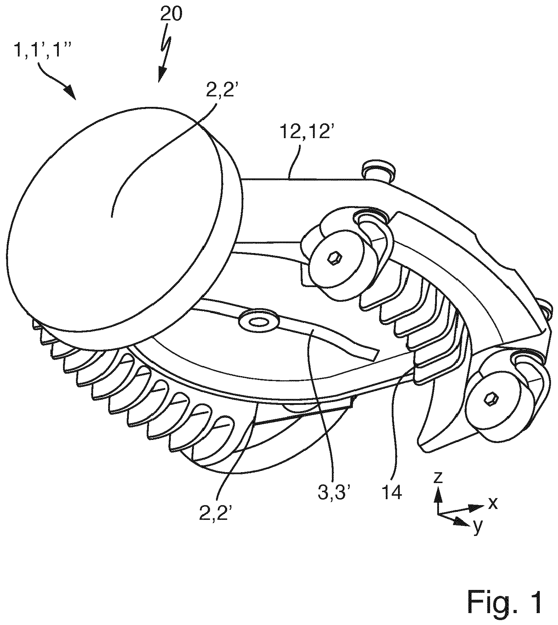

Fig. 1 bis 7 zeigen ein erfindungsgemäßes System 20 und ein erfindungsgemäßes Verfahren zum Betreiben eines autonomen mobilen Grünflächenbearbeitungsroboters 1.

Der Grünflächenbearbeitungsroboter 1 weist ein Antriebssystem 2 auf. Das Antriebssystem 2 ist zu einer Fortbewegung des Grünflächenbearbeitungsroboters 1 ausgebildet, insbesondere bewegt fort.

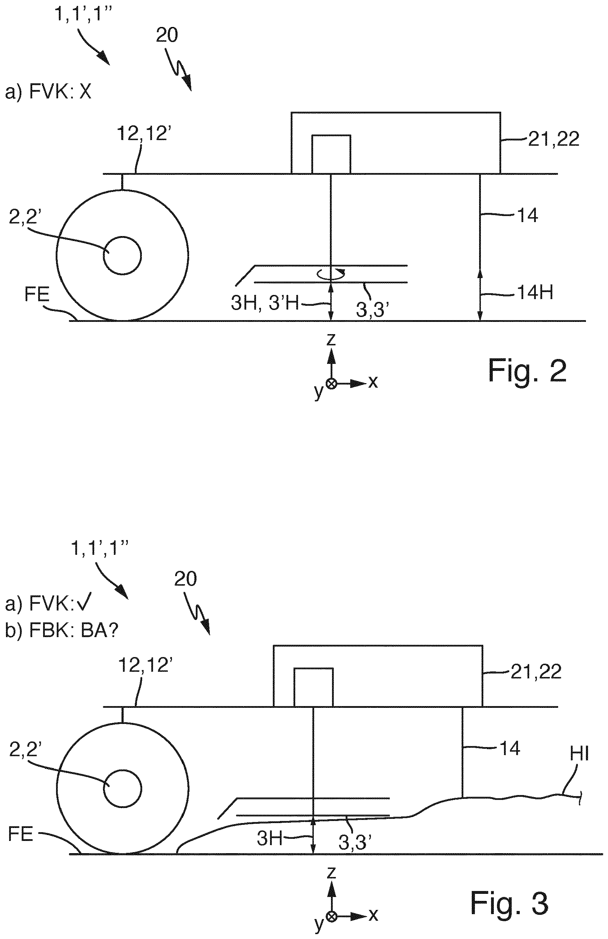

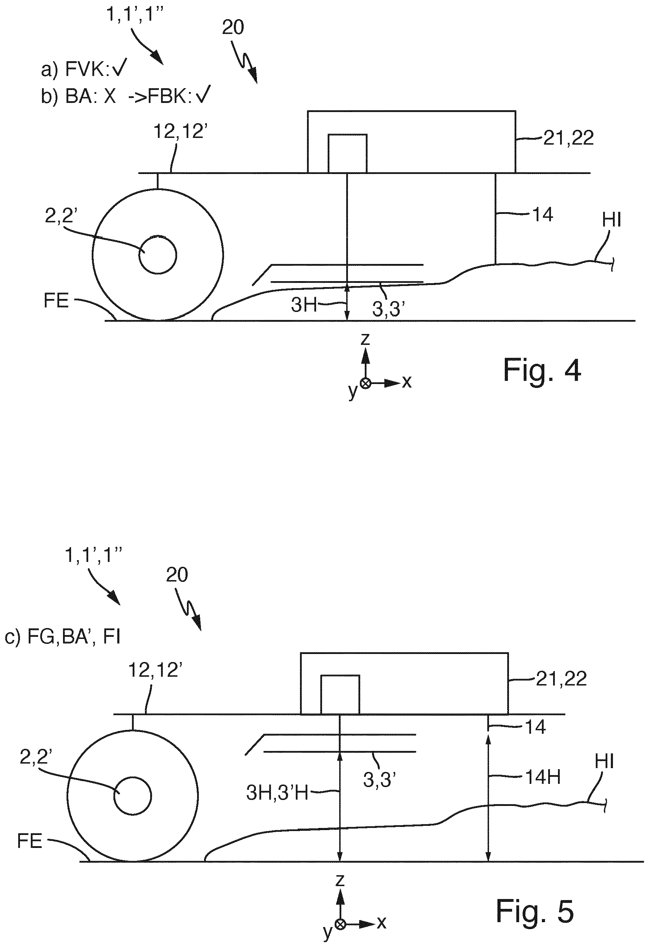

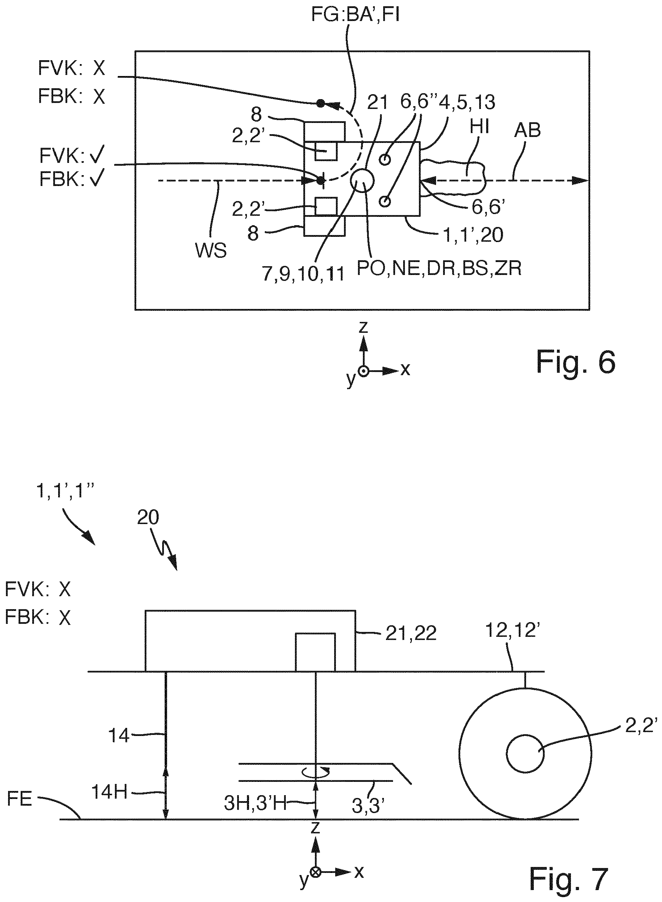

Das System 20 weist eine Überwachungs- und Betriebseinrichtung 21 auf, und insbesondere den Grünflächenbearbeitungsroboter 1. Insbesondere weist der Grünflächenbearbeitungsroboter 1 die Überwachungs- und Betriebseinrichtung 21 auf. Die Überwachungs- und Betriebseinrichtung 21 ist zum Überwachen ausgebildet, ob ein Festhäng-Vermutungs-Kriterium FVK erfüllt ist, insbesondere überwacht, wie in Fig. 2 gezeigt. Das Festhäng-Vermutungs-Kriterium FVK ist für ein mutmaßliches Festhängen des Grünflächenbearbeitungsroboters 1 charakteristisch, wie in Fig. 3 gezeigt. Des Weiteren ist die Überwachungs- und Betriebseinrichtung 21, falls das Festhäng-Vermutungs-Kriterium FVK erfüllt ist, zum Betreiben des Antriebssystems 2 zu einer Bewegungsänderung BA des Grünflächenbearbeitungsroboters 1 und zum Überwachen ausgebildet, ob ein Festhäng-Bestätigungs-Kriterium FBK erfüllt ist, insbesondere betreibt und überwacht, wie in Fig. 3 gezeigt. Das Festhäng-Bestätigungs-Kriterium FBK ist, dass sich die Bewegungsänderung BA nicht einstellt, wie in Fig. 4 gezeigt. Außerdem ist die Überwachungs- und Betriebseinrichtung 21, falls das Festhäng-Bestätigungs-Kriterium FBK erfüllt ist, zum Einleiten einer Festhäng-Gegenmaßnahme FG des Grünflächenbearbeitungsroboters 1 ausgebildet, insbesondere leitet ein, wie in Fig. 5 und 6 gezeigt.

Das Verfahren weist die Schritte auf: a) Überwachen, ob das Festhäng-Vermutungs-Kriterium FVK erfüllt ist, insbesondere mittels der Überwachungs- und Betriebseinrichtung 21. b) falls das Festhäng-Vermutungs-Kriterium FVK erfüllt ist, Betreiben des Antriebssystems 2 zu der Bewegungsänderung BA des Grünflächenbearbeitungsroboters 1 und Überwachen, ob das Festhäng-Bestätigungs-Kriterium FBK erfüllt ist, insbesondere mittels der Überwachungs- und Betriebseinrichtung 21. c) falls das Festhäng-Bestätigungs-Kriterium FBK erfüllt ist, Einleiten der Festhäng-Gegenmaßnahme FG des Grünflächenbearbeitungsroboters 1, insbesondere mittels der Überwachungs- und Betriebseinrichtung 21.

Im Detail ist der Grünflächenbearbeitungsroboter 1 ein Rasenmähroboter 1`, insbesondere aufweisend ein Rasenmähwerkzeug 3`.

Weiter ist der Grünflächenbearbeitungsroboter 1 als ein fahrbarer Grünflächenbearbeitungsroboter 1" ausgebildet. Zusätzlich oder alternativ weist das Antriebssystem 2 ein Fahrantriebssystem 2' auf. Insbesondere ist das Antriebssystem 2 das Fahrantriebssystem 2'. Das Fahrantriebssystem 2' ist zu einer Fahrbewegung des Grünflächenbearbeitungsroboters 1 ausgebildet.

Zudem weist der Schritt a) auf: Betreiben des Antriebssystems 2 zu der Fortbewegung des Grünflächenbearbeitungsroboters 1, insbesondere mittels der Überwachungs- und Betriebseinrichtung 21. Insbesondere weist der Schritt b) auf: verändertes Betreiben des Antriebssystems 2.

Des Weiteren ist das Festhäng-Vermutungs-Kriterium FVK, dass sich auf eine Fortbewegung des Grünflächenbearbeitungsroboters 1 nicht rückschließen lässt, insbesondere eine Stoßstange 4 des Grünflächenbearbeitungsroboters 1 nicht anstößt und/oder sich ein Abstand AB, eine Position PO, eine Wegstrecke WS und/oder eine Neigung NE des Grünflächenbearbeitungsroboters 1 nicht verändern/verändert und/oder der Grünflächenbearbeitungsroboter 1 keine Drehrate DR und/oder keine Beschleunigung BE erfährt, insbesondere innerhalb eines vorgegebenen Zeitraums ZR.

Außerdem wird das Überwachen des Schritts a) und/oder des Schritts b) mittels eines Stoßsensors 5, eines Abstandssensors 6, insbesondere eines Ultraschallsensors 6' und/oder eines Magnetfeldsensors 6", eines, insbesondere globalen und/oder lokalen, Positionssensors 7, eines, insbesondere visuellen, Odometriesensors 8, eines Neigungssensors 9, eines Drehratensensors 10 und/oder eines Beschleunigungssensors 11 des Grünflächenbearbeitungsroboters 1 ausgeführt.

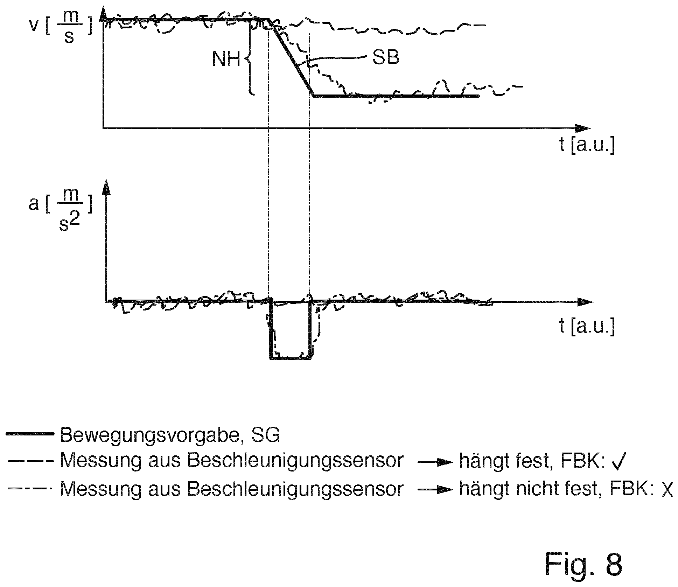

Weiter wird das Betreiben des Antriebssystems 2 zu der Bewegungsänderung BA mit einem negativen Hub NH einer Sollgeschwindigkeit SG, insbesondere von maximal - 0,6 m/s, insbesondere maximal - 0,3 m/s, und mit einer Sollbremsrampe SB, insbesondere von maximal - 4 m/s², insbesondere maximal - 2 m/s², ausgeführt, wie in Fig. 8 gezeigt.

In dem gezeigten Ausführungsbeispiel wird nicht die Geschwindigkeit v gemessen bzw. detektiert bzw. erfasst, sondern die Beschleunigung a, insbesondere mittels des Beschleunigungssensors 11. Die Geschwindigkeit v wird über die gemessene Beschleunigung a durch, insbesondere einfaches, Integrieren berechnet bzw. ermittelt. In alternativen Ausführungsbeispielen ist neben bzw. zusätzlich und/oder anstatt bzw. alternativ zu der Bremsrampe SB auch eine Beschleunigungsrampe, insbesondere eine Sollbeschleunigungsrampe, denkbar bzw. möglich, wobei das Diagramm bzw. die Fig. 8, insbesondere einfach, gespiegelt wird, insbesondere an der Zeitachse t.

Zudem sind das Betreiben des Antriebssystems 2 zu der Bewegungsänderung BA und die Festhäng-Gegenmaßnahme FG, insbesondere qualitativ und/oder quantitativ, verschieden.

Des Weiteren weist der Grünflächenbearbeitungsroboter 1 ein Bearbeitungswerkzeug 3, insbesondere das Rasenmähwerkzeug 3', auf. Eine Bearbeitungshöhe 3H des Bearbeitungswerkzeugs 3 ist verstellbar. Die Festhäng-Gegenmaßnahme FG weist auf: Vergrößern der Bearbeitungshöhe 3H, insbesondere mittels einer Höhenverstellungseinrichtung 22 der Überwachungs- und Betriebseinrichtung 21, wie in Fig. 5 gezeigt. Zusätzlich oder alternativ weist die Festhäng-Gegenmaßnahme FG auf, insbesondere zeitlich nach dem Vergrößern der Bearbeitungshöhe 3H: Betreiben des Antriebssystems 2 zu einer, insbesondere zweimal, größeren Bewegungsänderung BA' des Grünflächenbearbeitungsroboters 1, insbesondere in abgewandter, insbesondere entgegengesetzter, Fortbewegungsrichtung -x, wie in Fig. 6 gezeigt. Weiter zusätzlich oder alternativ weist die Festhäng-Gegenmaßnahme FG auf, insbesondere zeitlich nach dem Betreiben des Antriebssystems 2 zu der größeren Bewegungsänderung BA`: Ausgeben und/oder Übertragen einer nutzerwahrnehmbaren Festhäng-Information Fl.

Insbesondere ist das Bearbeitungswerkzeug 3, insbesondere rotatorisch, bewegbar. Die Festhäng-Gegenmaßnahme FG weist insbesondere auf: Beenden einer Bewegung des Bearbeitungswerkzeugs 3.

Zusätzlich oder alternativ weist der Grünflächenbearbeitungsroboter 1 eine Fahrebene FE auf, wobei die Bearbeitungshöhe 3H über der Fahrebene FE ist.

Weiter zusätzlich oder alternativ weist der Grünflächenbearbeitungsroboter 1 eine Schutzeinrichtung 14 auf. Die Schutzeinrichtung 14 ist zu einem Schutz vor einem Eingriff, insbesondere durch einen Nutzer, in das Bearbeitungswerkzeug 3 ausgebildet, insbesondere vor dem Bearbeitungswerkzeug 3 angeordnet. Eine Schutzhöhe 14H der Schutzeinrichtung 14 ist verstellbar. Die Festhäng-Gegenmaßnahme FG weist auf: Vergrößern der Schutzhöhe 14H, insbesondere mittels der Höhenverstellungseinrichtung 22. Insbesondere kann die Schutzeinrichtung einen, insbesondere nach unten ausgerichteten und/oder nach unten offenen, Kamm und/oder Käfig aufweisen, insbesondere sein. Weiter zusätzlich oder alternativ kann die Schutzeinrichtung ein, insbesondere nach unten ausgerichtetes und/oder nach unten offenes, Werkzeuggehäuse, insbesondere ein Mähdeckgehäuse, aufweisen, insbesondere sein.

Zudem ist das Festhängen des Grünflächenbearbeitungsroboters 1 mit einem Berührungsteil, insbesondere dem Bearbeitungswerkzeug 3 und/oder der Schutzeinrichtung 14, und/oder auf einem Hindernis Hl.

Des Weiteren weist der Grünflächenbearbeitungsroboter 1 ein Fortbewegungsgestell 12, insbesondere ein Fahrgestell 12`, und/oder eine Abdeckhaube 13 auf. Die Bearbeitungshöhe 3H ist gegenüber dem Fortbewegungsgestell 12 und/oder der Abdeckhaube 13 verstellbar.

Außerdem weist das Verfahren auf: falls das Festhäng-Vermutungs-Kriterium FVK und/oder das Festhäng-Bestätigungs-Kriterium FBK nicht erfüllt sind/ist, Betreiben des Antriebssystems 2 zu der Fortbewegung des Grünflächenbearbeitungsroboters 1 und/oder kein Einleiten und/oder Beenden der Festhäng-Gegenmaßnahme FG, insbesondere mittels der Überwachungs- und Betriebseinrichtung 21, insbesondere Verkleinern der Bearbeitungshöhe 3H und/oder Beginnen der Bewegung des Bearbeitungswerkzeugs 3, wie in Fig. 7 gezeigt.

Wie die gezeigten und oben erläuterten Ausführungsbeispiele deutlich machen, stellt die Erfindung ein vorteilhaftes Verfahren und ein vorteilhaftes System, insbesondere jeweils, zum Betreiben eines autonomen mobilen Grünflächenbearbeitungsroboters bereit, das verbesserte Eigenschaften aufweist.

## Patentansprüche

1. Verfahren zum Betreiben eines autonomen mobilen Grünflächenbearbeitungsroboters (1), wobei der Grünflächenbearbeitungsroboter (1) ein Antriebssystem (2) aufweist, wobei das Antriebssystem (2) zu einer Fortbewegung des Grünflächenbearbeitungsroboters (1) ausgebildet ist, wobei das Verfahren die Schritte aufweist:
a) Überwachen, ob ein Festhäng-Vermutungs-Kriterium (FVK) erfüllt ist, wobei das Festhäng-Vermutungs-Kriterium (FVK) für ein mutmaßliches Festhängen des Grünflächenbearbeitungsroboters (1) charakteristisch ist,
b) falls das Festhäng-Vermutungs-Kriterium (FVK) erfüllt ist, Betreiben des Antriebssystems (2) zu einer Bewegungsänderung (BA) des Grünflächenbearbeitungsroboters (1) und Überwachen, ob ein Festhäng-Bestätigungs-Kriterium (FBK) erfüllt ist, wobei das Festhäng-Bestätigungs-Kriterium (FBK) ist, dass sich die Bewegungsänderung (BA) nicht einstellt, und
c) falls das Festhäng-Bestätigungs-Kriterium (FBK) erfüllt ist, Einleiten einer Festhäng-Gegenmaßnahme (FG) des Grünflächenbearbeitungsroboters (1).

2. Verfahren nach dem vorhergehenden Anspruch,
- wobei der Grünflächenbearbeitungsroboter (1) ein Rasenmähroboter (1'), insbesondere aufweisend ein Rasenmähwerkzeug (3`), ist.

3. Verfahren nach einem der vorhergehenden Ansprüche,
- wobei der Grünflächenbearbeitungsroboter (1) als ein fahrbarer Grünflächenbearbeitungsroboter (1") ausgebildet ist, und/oder
- wobei das Antriebssystem (2) ein Fahrantriebssystem (2') aufweist, insbesondere ist, wobei das Fahrantriebssystem (2') zu einer Fahrbewegung des Grünflächenbearbeitungsroboters (1) ausgebildet ist.

4. Verfahren nach einem der vorhergehenden Ansprüche,
- wobei der Schritt a) aufweist: Betreiben des Antriebssystems (2) zu der Fortbewegung des Grünflächenbearbeitungsroboters (1),
- insbesondere wobei der Schritt b) aufweist: verändertes Betreiben des Antriebssystems (2).

5. Verfahren nach einem der vorhergehenden Ansprüche, insbesondere dem vorhergehenden Anspruch,
- wobei das Festhäng-Vermutungs-Kriterium (FVK) ist, dass sich auf eine Fortbewegung des Grünflächenbearbeitungsroboters (1) nicht rückschließen lässt, insbesondere eine Stoßstange (4) des Grünflächenbearbeitungsroboters (1) nicht anstößt und/oder sich ein Abstand (AB), eine Position (PO), eine Wegstrecke (WS) und/oder eine Neigung (NE) des Grünflächenbearbeitungsroboters (1) nicht verändern/verändert und/oder der Grünflächenbearbeitungsroboter (1) keine Drehrate (DR) und/oder keine Beschleunigung (BS) erfährt, insbesondere innerhalb eines vorgegebenen Zeitraums (ZR).

6. Verfahren nach einem der vorhergehenden Ansprüche, insbesondere dem vorhergehenden Anspruch,
- wobei das Überwachen des Schritts a) und/oder des Schritts b) mittels eines Stoßsensors (5), eines Abstandssensors (6), insbesondere eines Ultraschallsensors (6`) und/oder eines Magnetfeldsensors (6"), eines, insbesondere globalen und/oder lokalen, Positionssensors (7), eines, insbesondere visuellen, Odometriesensors (8), eines Neigungssensors (9), eines Drehratensensors (10) und/oder eines Beschleunigungssensors (11) des Grünflächenbearbeitungsroboters (1) ausgeführt wird.

7. Verfahren nach einem der vorhergehenden Ansprüche,
- wobei das Betreiben des Antriebssystems (2) zu der Bewegungsänderung (BA) mit einem negativen Hub (NH) einer Sollgeschwindigkeit (SG), insbesondere von maximal - 0,6 m/s, insbesondere maximal - 0,3 m/s, und mit einer Sollbremsrampe (SB), insbesondere von maximal - 4 m/s², insbesondere maximal - 2 m/s², ausgeführt wird.

8. Verfahren nach einem der vorhergehenden Ansprüche,
- wobei das Betreiben des Antriebssystems (2) zu der Bewegungsänderung (BA) und die Festhäng-Gegenmaßnahme (FG), insbesondere qualitativ und/oder quantitativ, verschieden sind.

9. Verfahren nach einem der vorhergehenden Ansprüche,
- wobei der Grünflächenbearbeitungsroboter (1) ein Bearbeitungswerkzeug (3) aufweist, wobei eine Bearbeitungshöhe (3H) des Bearbeitungswerkzeugs (3) verstellbar ist, wobei die Festhäng-Gegenmaßnahme (FG) aufweist: Vergrößern der Bearbeitungshöhe (3H), und/oder
- wobei die Festhäng-Gegenmaßnahme (FG) aufweist, insbesondere zeitlich nach dem Vergrößern der Bearbeitungshöhe (3H): Betreiben des Antriebssystems (2) zu einer, insbesondere zweimal, größeren Bewegungsänderung (BA`) des Grünflächenbearbeitungsroboters (1), insbesondere in abgewandter, insbesondere entgegengesetzter, Fortbewegungsrichtung (-x), und/oder
- wobei die Festhäng-Gegenmaßnahme (FG) aufweist, insbesondere zeitlich nach dem Betreiben des Antriebssystems (2) zu der größeren Bewegungsänderung (BA`): Ausgeben und/oder Übertragen einer nutzerwahrnehmbaren Festhäng-Information (FI).

10. Verfahren nach dem vorhergehenden Anspruch,
- wobei der Grünflächenbearbeitungsroboter (1) ein Fortbewegungsgestell (12), insbesondere ein Fahrgestell (12`), und/oder eine Abdeckhaube (13) aufweist, wobei die Bearbeitungshöhe (3H) gegenüber dem Fortbewegungsgestell (12) und/oder der Abdeckhaube (13) verstellbar ist.

11. Verfahren nach einem der vorhergehenden Ansprüche,
- wobei das Verfahren aufweist: falls das Festhäng-Vermutungs-Kriterium (FVK) und/oder das Festhäng-Bestätigungs-Kriterium (FBK) nicht erfüllt sind/ist, Betreiben des Antriebssystems (2) zu der Fortbewegung des Grünflächenbearbeitungsroboters (1) und/oder kein Einleiten und/oder Beenden der Festhäng-Gegenmaßnahme (FG).

12. System (20) zum Betreiben eines autonomen mobilen Grünflächenbearbeitungsroboters (1), wobei der Grünflächenbearbeitungsroboter (1) ein Antriebssystem (2) aufweist, wobei das Antriebssystem (2) zu einer Fortbewegung des Grünflächenbearbeitungsroboters (1) ausgebildet ist, insbesondere zum Ausführen eines Verfahrens nach einem der vorhergehenden Ansprüche, wobei das System (20) aufweist:
- eine Überwachungs- und Betriebseinrichtung (21), wobei die Überwachungs- und Betriebseinrichtung (21) dazu ausgebildet ist:
- zum Überwachen, ob ein Festhäng-Vermutungs-Kriterium (FVK) erfüllt ist, wobei das Festhäng-Vermutungs-Kriterium (FVK) für ein mutmaßliches Festhängen des Grünflächenbearbeitungsroboters (1) charakteristisch ist,
- falls das Festhäng-Vermutungs-Kriterium (FVK) erfüllt ist, zum Betreiben des Antriebssystems (2) zu einer Bewegungsänderung (BA) des Grünflächenbearbeitungsroboters (1) und zum Überwachen, ob ein Festhäng-Bestätigungs-Kriterium (FBK) erfüllt ist, wobei das Festhäng-Bestätigungs-Kriterium (FBK) ist, dass sich die Bewegungsänderung (BA) nicht einstellt, und
- falls das Festhäng-Bestätigungs-Kriterium (FBK) erfüllt ist, zum Einleiten einer Festhäng-Gegenmaßnahme (FG) des Grünflächenbearbeitungsroboters (1),
- und insbesondere den Grünflächenbearbeitungsroboter (1), insbesondere wobei der Grünflächenbearbeitungsroboter (1) die Überwachungs- und Betriebseinrichtung (21) aufweist.
